# FASCICULE DE BREVET EUROPEEN

(11) **EP 3 784 630 B1**
(45) Date de publication et mention de la délivrance du brevet: **11.10.2023**
(21) Numéro de dépôt: 19728477.1
(22) Date de dépôt: 19.04.2019
(51) Int. Cl.: C03C 17/36

(54) **MIROIR COLORE**
FARBIGER SPIEGEL
COLOURED MIRROR

(30) Priorité: 26.04.2018 FR 1853654
(43) Date de publication de la demande: 03.03.2021
(73) Titulaire: Saint-Gobain Glass France, 92400 Courbevoie (FR)
(72) Inventeur: MARIANI, Silvia, 93310 Le Pré Saint Gervais (FR)
(74) Mandataire: Saint-Gobain Recherche
(86) Numéro de dépôt international: PCT/FR2019/050944
(87) Numéro de publication internationale: WO 2019/207241

(56) Documents cités:
- EP-A2- 0 104 870
- FR-A1- 3 025 894
- US-A- 5 215 832

## Description

L'invention se rapporte au domaine des miroirs. Elle concerne plus particulièrement des miroirs spéculaires, dans lesquels un utilisateur peut se mirer. De tels miroirs sont par exemple disposés à l'intérieur d'habitations, par exemple dans des salles de bain, ou sont utilisés comme éléments de pièces d'ameublement (portes de placard...) ou de décoration. Ces miroirs comprennent généralement un substrat de verre revêtu en face 2 (la face opposée à celle tournée vers l'utilisateur) d'une couche réfléchissante en argent, laquelle est revêtue d'une couche de peinture. La peinture a une fonction optique, celle d'empêcher toute visibilité au travers du miroir en bloquant le passage des rayons lumineux transmis à travers la couche d'argent. La peinture a également pour fonction de protéger la couche d'argent contre la US-5215832 décrit en figure 1 un miroir conventionnel dans lequel une couche de cuivre, destinée 1 protéger l'argent, est nécessairement disposée au-dessus de la couche d'argent. US-5215832 décrit également en figures 2 et 3 un miroir dans lequel une couche barrière protectrice pouvant contenir du cuivre (16) est nécessairement disposée au-dessus de la couche d'argent. EP-104870 consiste à incorporer à une couche d'argent un autre métal tel que le cuivre, en déposant une couche de ce métal au-dessus de la couche d'argent (cf. revendications).

Le but de l'invention est de proposer un miroir ayant en réflexion une teinte cuivrée.

A cet effet, l'invention a pour objet un miroir spéculaire comprenant un substrat de verre revêtu sur une de ses faces, successivement à partir dudit substrat de verre, d'un empilement de couches minces, d'une couche réfléchissante d'argent puis d'une couche de peinture. L'empilement de couches minces comprend au moins une couche métallique continue à base de cuivre ayant une épaisseur physique allant de 2 à 40 nm surmontée d'une couche d'adhésion en oxyde métallique ayant un indice de réfraction à 550 nm compris dans un domaine allant de 1,8 à 2, 6.

L'invention a aussi pour un objet un procédé d'obtention du miroir précité, comprenant une étape de dépôt de l'empilement de couches minces sur un substrat de verre, puis une étape de dépôt de la couche réfléchissante d'argent sur ledit empilement de couches minces, puis une étape de dépôt de la couche de peinture liquide sur ladite couche d'argent, puis une étape de séchage de ladite couche de peinture liquide.

Par l'expression « revêtu », on entend que la couche qui revêt le substrat ou une autre couche est déposée au-dessus dudit substrat ou de cette autre couche, mais pas nécessairement en contact avec eux. Lorsqu'une première couche est disposée « au-dessus » d'une deuxième couche (ou « surmonte » une deuxième couche), on entend que la première couche est plus éloignée du substrat que la deuxième couche.

Par l'expression « à base de », on entend en général que la couche comprend au moins 50% en poids du composé en question, en particulier au moins 60%, et même 70% ou 80%, voire 90% en poids du composé en question. La couche à base de cuivre comprend avantageusement au moins 80%, voire 90% de cuivre, notamment est constituée de cuivre.

De préférence, l'empilement de couches minces est au contact du substrat de verre et de la couche réfléchissante d'argent. Le miroir est alors de préférence constitué du substrat de verre, de l'empilement de couches minces, de la couche réfléchissante d'argent et de la couche de peinture. La couche d'adhésion est donc de préférence en contact avec la couche réfléchissante d'argent.

La notion de contact n'exclut toutefois pas la présence de traitements de surface classiquement utilisés dans le procédé d'argenture, lorsque la couche d'argent est déposée par ce procédé. Dans ce dernier cas, il est avantageux de traiter la surface sur laquelle l'argent sera déposé par une solution contenant des chlorures d'étain et de palladium. Ces traitements peuvent former des couches extrêmement minces détectables uniquement par des techniques analytiques poussées.

L'empilement de couches minces ne comprend de préférence qu'une seule couche métallique à base de cuivre, notamment qu'une seule couche de cuivre.

Le substrat de verre est de préférence un substrat plan. L'épaisseur du substrat de verre est de préférence comprise dans un domaine allant de 1 à 19 mm, notamment de 2 à 12 mm et même de 3 à 9 mm.

Le verre est de préférence un verre silico-sodo-calcique, mais d'autres types de verres comme les borosilicates ou les aluminosilicates peuvent être employés. Le verre est de préférence obtenu par flottage. Le verre est de préférence incolore. Il comprend de préférence une teneur pondérale en fer, exprimée en Fe₂O₃, comprise entre 0,01 et 0,20%, notamment entre 0,04 et 0,12%.

La couche réfléchissante d'argent est de préférence déposée par argenture. On entend par argenture le procédé classiquement utilisé pour la fabrication de miroirs, et comprenant le dépôt par voie liquide d'un sel d'argent et d'un agent réducteur.

D'autres procédés sont possibles, comme par exemple la pulvérisation cathodique assistée par champ magnétique, fréquemment appelée « procédé magnétron ». Les couches réfléchissantes d'argent ainsi obtenues sont toutefois plus sensibles à la corrosion.

La couche réfléchissante d'argent possède de préférence une épaisseur physique allant de 50 à 200 nm, notamment de 50 à 100 nm, voire de 60 à 90 nm.

De préférence, la couche réfléchissante d'argent n'est pas recouverte par une couche de cuivre.

Dans le miroir, la couche de peinture est généralement obtenue par séchage d'une peinture liquide déposée sur le substrat. Dans l'ensemble du présent texte, le terme « peinture » sera employé pour qualifier la peinture à l'état sec, tandis que le terme « peinture liquide » sera utilisé pour qualifier la peinture à l'état liquide, destinée à être déposée sur le substrat.

La peinture liquide est de préférence à base aqueuse ou sans solvant. Par « base aqueuse » on entend que la peinture liquide comprend moins de 10%, notamment 5% en poids de solvant organique, voire ne comprend pas de solvants organiques.

Le pourcentage pondéral d'extrait sec de la peinture liquide est de préférence d'au moins 50%, voire 60%, notamment de 60 à 70% dans le cas de peintures liquides à base aqueuse. Il peut être de 100% dans le cas de peinture liquide sans solvant.

La couche de peinture comprend de préférence au moins une résine et au moins une charge minérale, dont au moins un pigment. Au moins une résine est de préférence choisie parmi les résines acryliques, les résines polyuréthanes, les résines époxydes et les résines alkydes. Au moins une charge minérale est avantageusement choisie parmi l'oxyde de zinc, le sulfate de baryum, les phosphates de zinc, notamment l'orthophosphate de zinc, le talc, le carbonate de calcium, le mica, l'oxyde de titane, le noir de carbone et leurs mélanges. Les charges minérales permettent d'améliorer la résistance à la corrosion de la couche d'argent et/ou d'obtenir l'opacité ou la teinte désirée. La couche de peinture ne contient de préférence pas de plomb. La couche de peinture comprend de préférence 20 à 50% en poids de résines et 30 à 80% en poids de charges minérales. La couche de peinture peut en outre comprendre divers additifs, tels que des agents antimousse, des biocides ou des tensioactifs. La couche de peinture liquide est de préférence déposée au rideau, par pulvérisation ou au rouleau. Elle peut être déposée en plusieurs passes.

L'étape de séchage est de préférence mise en oeuvre dans un four, à une température comprise entre 50 et 250°C, notamment entre 100 et 200°C. Le temps de séchage est de préférence de 2 à 60 minutes, notamment de 5 à 30 minutes. L'étape de séchage est de préférence précédée d'une étape de pré-séchage à plus basse température, notamment entre 30 et 60°C pendant 5 à 60 minutes.

La couche de peinture (après séchage) présente de préférence une épaisseur comprise entre 40 et 350 µm, notamment entre 70 et 300 µm, voire entre 100 et 250 µm.

L'empilement de couches minces est de préférence déposé par pulvérisation cathodique assistée par champ magnétique, aussi appelée procédé « magnétron ». D'autres techniques sont toutefois possibles, par exemple les techniques de dépôt chimique en phase vapeur (CVD).

La couche d'adhésion est de préférence en oxyde de titane. La couche d'adhésion en oxyde de titane est de préférence déposée par pulvérisation cathodique assistée par champ magnétique au moyen d'une cible céramique en oxyde de titane, de préférence sans ajout d'oxygène dans le plasma ou avec un ajout en faible quantité. La couche d'adhésion possède de préférence une épaisseur physique allant de 2 à 20 nm, notamment de 3 à 10 nm.

L'indice de réfraction de la couche d'adhésion est choisi de manière à éviter la formation d'interférences susceptibles de modifier fortement la couleur en réflexion du miroir. En utilisant des empilements interférentiels, la couleur en réflexion peut en outre dépendre de l'angle de vision. L'indice de réfraction de la couche d'adhésion est de préférence d'au moins 1,9, notamment 2,0, voire 2,1 ou 2,2. Il est de préférence d'au plus 2,5.

L'empilement de couches minces est de préférence constitué de deux couches minces, par conséquent la couche métallique à base de cuivre et la couche d'adhésion.

L'empilement de couches minces est par exemple constitué, successivement à partir du substrat de verre, de la couche métallique à base de cuivre (avantageusement en contact avec le substrat de verre), puis de la couche d'adhésion (avantageusement en contact avec la couche réfléchissante d'argent). Le miroir est de préférence constitué, dans l'ordre, du substrat de verre, de la couche métallique à base de cuivre, notamment en cuivre, de la couche d'adhésion, notamment en oxyde de titane, de la couche réfléchissante d'argent, et de la couche de peinture.

L'épaisseur des couches influe sur la couleur obtenue en réflexion. Il est ainsi possible d'obtenir des teintes plus ou moins soutenues.

L'épaisseur physique de la couche métallique à base de cuivre est de préférence comprise dans un domaine allant de 5 à 30 nm, notamment de 10 à 20 nm.

Le miroir selon l'invention possède de préférence les coordonnées colorimétriques en réflexion suivantes : L* allant de 50 à 92, notamment de 60 à 90, voire de 70 à 88, a* allant de 0 à 10, notamment de 1 à 8, voire de 2 à 6, b* allant de 5 à 30, notamment de 8 à 25, voire de 10 à 18. Les coordonnées colorimétriques sont calculées à partir d'un spectre en réflexion entre 380 et 780 nm, en prenant en compte l'illuminant D65 et l'observateur de référence CIE-1964 (10°). La réflexion lumineuse du miroir (également en prenant en compte l'illuminant D65 et l'observateur de référence CIE-1964 (10°)) est de préférence d'au moins 50%, notamment 60%. La transmission lumineuse est quant à elle nulle du fait de la présence de la couche de peinture, qui est opaque.

Le miroir présente de préférence une bonne résistance à la corrosion. Typiquement, la corrosion de bord est d'au plus 1,5 mm, voire 1,2 mm et même 1,0 mm après un test CASS de 120 heures selon la norme ISO 9227 :2012. Le test CASS est un test de résistance au brouillard salin cupro-acétique.

L'invention est illustrée par les exemples non limitatifs qui suivent.

### Exemple 1

Un substrat de verre clair commercialisé par la Demanderesse sous la référence commerciale Planiclear a été revêtu d'un empilement de couches minces par pulvérisation cathodique assistée par champ magnétique (procédé magnétron).

L'empilement consiste successivement en :
- une couche de cuivre, déposée directement sur la surface du verre, et ayant une épaisseur physique de 10 nm, puis
- une couche d'adhésion en oxyde de titane d'une épaisseur physique de 5 nm, déposée à l'aide d'une cible céramique en oxyde de titane sous-stœchiométrique, en l'absence d'oxygène dans le plasma. L'indice de réfraction de cette couche est de 2,4 pour une longueur d'onde de 550 nm.

Le substrat muni de cet empilement a ensuite été revêtu d'une couche réfléchissante d'argent par un procédé d'argenture. L'épaisseur de la couche d'argent est de 70 nm. De manière connue, la couche d'argent a ensuite été revêtue d'une couche de peinture.

Les coordonnés colorimétriques en réflexion du miroir obtenu (illuminant D65 et observateur de référence CIE-1964) sont les suivantes : L*=84,55, a*=4,30 et b*=12,69. La teinte en réflexion est cuivrée.

### Exemple 2

Un substrat de verre clair commercialisé par la Demanderesse sous la référence commerciale Planiclear a été revêtu d'un empilement de couches minces par pulvérisation cathodique assistée par champ magnétique (procédé magnétron).

L'empilement consiste successivement en :
- une couche de cuivre, déposée directement sur la surface du verre, et ayant une épaisseur physique de 17 nm, puis
- une couche d'adhésion en oxyde de titane d'une épaisseur physique de 5 nm, déposée à l'aide d'une cible céramique en oxyde de titane sous-stœchiométrique, en l'absence d'oxygène dans le plasma. L'indice de réfraction de cette couche est de 2,4 pour une longueur d'onde de 550 nm.

Le substrat muni de cet empilement a ensuite été revêtu d'une couche réfléchissante d'argent par un procédé d'argenture. L'épaisseur de la couche d'argent est de 70 nm. De manière connue, la couche d'argent a ensuite été revêtue d'une couche de peinture.

Les coordonnés colorimétriques en réflexion du miroir obtenu (illuminant D65 et observateur de référence CIE-1964) sont les suivantes : L*=63,90, a*=8,37 et b*=10,93. La teinte en réflexion est cuivrée.

## Revendications

1. Miroir spéculaire comprenant un substrat de verre revêtu sur une de ses faces, successivement à partir dudit substrat de verre, d'un empilement de couches minces, d'une couche réfléchissante d'argent puis d'une couche de peinture, **caractérisé en ce que** ledit empilement de couches minces comprend au moins une couche métallique continue à base de cuivre ayant une épaisseur physique allant de 2 à 40 nm surmontée d'une couche d'adhésion en oxyde métallique ayant un indice de réfraction à 550 nm compris dans un domaine allant de 1,8 à 2,6.

2. Miroir selon la revendication 1, dans lequel l'empilement de couches minces est au contact du substrat de verre et de la couche réfléchissante d'argent.

3. Miroir selon l'une des revendications précédentes, qui est constitué du substrat de verre, de l'empilement de couches minces, de la couche réfléchissante d'argent et de la couche de peinture.

4. Miroir selon l'une des revendications précédentes, dans lequel l'empilement de couches minces ne comprend qu'une seule couche de cuivre.

5. Miroir selon l'une des revendications précédentes, dans lequel la couche réfléchissante d'argent est déposée par argenture.

6. Miroir selon l'une des revendications précédentes, dans lequel la couche réfléchissante d'argent possède une épaisseur physique allant de 50 à 200 nm, notamment de 50 à 100 nm.

7. Miroir selon l'une des revendications précédentes, tel que la couche réfléchissant d'argent n'est pas recouverte par une couche de cuivre.

8. Miroir selon l'une des revendications précédentes, tel que la couche de peinture comprend au moins une résine et au moins une charge minérale, dont au moins un pigment.

9. Miroir selon l'une des revendications précédentes, dans lequel l'empilement de couches minces est déposé par pulvérisation cathodique assistée par champ magnétique.

10. Miroir selon l'une des revendications précédentes, dans lequel la couche d'adhésion est en oxyde de titane.

11. Miroir selon l'une des revendications précédentes, tel que la couche d'adhésion possède une épaisseur physique allant de 2 à 20 nm, notamment de 3 à 10 nm.

12. Miroir selon l'une des revendications précédentes, dans lequel l'empilement de couches minces est constitué de la couche métallique à base de cuivre et de la couche d'adhésion.

13. Miroir selon l'une des revendications précédentes, tel que l'épaisseur physique de la couche métallique à base de cuivre est comprise dans un domaine allant de 5 à 30 nm, notamment de 10 à 20 nm.

14. Miroir selon l'une des revendications précédentes, qui possède les coordonnées colorimétriques en réflexion suivantes : L* allant de 50 à 92, a* allant de 0 à 10, b* allant de 5 à 30.

15. Procédé d'obtention d'un miroir selon l'une des revendications précédentes, comprenant une étape de dépôt de l'empilement de couches minces sur un substrat de verre, puis une étape de dépôt de la couche réfléchissante d'argent sur ledit empilement de couches minces, puis une étape de dépôt d'une couche de peinture liquide sur ladite couche d'argent, puis une étape de séchage de ladite couche de peinture liquide.

## Patentansprüche

1. Spiegelnder Spiegel, umfassend ein Glassubstrat, das auf einer seiner Flächen, nacheinander von dem Glassubstrat, mit einem Stapel dünner Schichten, einer reflektierenden Silberschicht, dann einer Farbschicht, beschichtet ist,
**dadurch gekennzeichnet, dass** der Stapel dünner Schichten mindestens eine durchgehende kupferbasierte Metallschicht aufweist, die eine physikalische Dicke von 2 bis 40 nm aufweist, die von einer Haftschicht aus Metalloxid, die einen Brechungsindex von 550 nm in einem Bereich von 1,8 bis 2,6 aufweist, überragt wird.

2. Spiegel nach Anspruch 1, wobei der Stapel dünner Schichten in Berührung mit dem Glassubstrat und der reflektierenden Silberschicht ist.

3. Spiegel nach einem der vorstehenden Ansprüche, der aus dem Glassubstrat, dem Stapel dünner Schichten, der reflektierenden Silberschicht und der Farbschicht besteht.

4. Spiegel nach einem der vorstehenden Ansprüche, wobei der Stapel dünner Schichten nur eine einzige Kupferschicht umfasst.

5. Spiegel nach einem der vorstehenden Ansprüche, wobei die reflektierende Silberschicht durch Versilberung abgeschieden wird.

6. Spiegel nach einem der vorstehenden Ansprüche, wobei die reflektierende Silberschicht eine physikalische Dicke von 50 bis 200 nm, insbesondere von 50 bis 100 nm, besitzt.

7. Spiegel nach einem der vorstehenden Ansprüche, wobei die reflektierende Silberschicht nicht durch eine Kupferschicht bedeckt ist.

8. Spiegel nach einem der vorstehenden Ansprüche, wobei die Farbschicht mindestens ein Harz und mindestens einen Mineralfüllstoff umfasst, von denen mindestens eins ein Pigment ist.

9. Spiegel nach einem der vorstehenden Ansprüche, wobei der Stapel dünner Schichten durch Kathodenzerstäubung, unterstützt durch ein Magnetfeld, abgeschieden wird.

10. Spiegel nach einem der vorstehenden Ansprüche, wobei die Haftschicht aus Titanoxid ist.

11. Spiegel nach einem der vorstehenden Ansprüche, wobei die Haftschicht eine physikalische Dicke von 2 bis 20 nm, insbesondere von 3 bis 10 nm, besitzt.

12. Spiegel nach einem der vorstehenden Ansprüche, wobei der Stapel dünner Schichten aus der kupferbasierten Metallschicht und der Haftschicht besteht.

13. Spiegel nach einem der vorstehenden Ansprüche, wobei die physikalische Dicke der kupferbasierten Metallschicht in einem Bereich von 5 bis 30 nm, insbesondere von 10 bis 20 nm, liegt.

14. Spiegel nach einem der vorstehenden Ansprüche, der die folgenden kolorimetrischen Koordinaten bei Reflektion besitzt: L* von 50 bis 92, a* von 0 bis 10, b* von 5 bis 30.

15. Verfahren zum Erhalten eines Spiegels nach einem der vorstehenden Ansprüche, umfassend einen Schritt des Abscheidens des Stapels dünner Schichten auf einem Glassubstrat, dann einen Schritt des Abscheidens der reflektierenden Silberschicht auf den Stapel dünner Schichten, dann einen Schritt des Abscheidens einer flüssigen Farbschicht auf der Silberschicht, dann einen Schritt zum Trocknen der flüssigen Farbschicht.

## Claims

1. A specular mirror comprising a glass substrate coated on one of its faces, successively from said glass substrate, with a stack of thin layers, with a reflective silver layer and then with a layer of paint, **characterized in that** said stack of thin layers comprises at least one continuous copper-based metal layer having a physical thickness ranging from 2 to 40 nm surmounted by an adhesion layer made of metal oxide having a refractive index at 550 nm within a range extending from 1.8 to 2.6.

2. The mirror as claimed in claim 1, in which the stack of thin layers is in contact with the glass substrate and with the reflective silver layer.

3. The mirror as claimed in either of the preceding claims, which is formed of the glass substrate, of the stack of thin layers, of the reflective silver layer and of the layer of paint.

4. The mirror as claimed in one of the preceding claims, in which the stack of thin layers comprises only a single copper layer.

5. The mirror as claimed in one of the preceding claims, in which the reflective silver layer is deposited by silvering.

6. The mirror as claimed in one of the preceding claims, in which the reflective silver layer has a physical thickness ranging from 50 to 200 nm, in particular from 50 to 100 nm.

7. The mirror as claimed in one of the preceding claims, such that the reflective silver layer is not covered with a copper layer.

8. The mirror as claimed in one of the preceding claims, such that the layer of paint comprises at least one resin and at least one inorganic filler, including at least one pigment.

9. The mirror as claimed in one of the preceding claims, in which the stack of thin layers is deposited by magnetic field-assisted cathode sputtering.

10. The mirror as claimed in one of the preceding claims, in which the adhesion layer is made of titanium oxide.

11. The mirror as claimed in one of the preceding claims, such that the adhesion layer has a physical thickness ranging from 2 to 20 nm, in particular from 3 to 10 nm.

12. The mirror as claimed in one of the preceding claims, in which the stack of thin layers consists of the copper-based metal layer and of the adhesion layer.

13. The mirror as claimed in one of the preceding claims, such that the physical thickness of the copper-based metal layer is within a range extending from 5 to 30 nm, in particular from 10 to 20 nm.

14. The mirror as claimed in one of the preceding claims, which has the following colorimetric coordinates in reflection: L* ranging from 50 to 92, a* ranging from 0 to 10, b* ranging from 5 to 30.

15. A process for obtaining a mirror as claimed in one of the preceding claims, comprising a step of deposition of the stack of thin layers on a glass substrate, then a step of deposition of the reflective silver layer on said stack of thin layers, then a step of deposition of a layer of liquid paint on said silver layer, then a step of drying said layer of liquid paint.
